# EUROPEAN PATENT APPLICATION

(11) **EP 4 559 811 A1**
(43) Date of publication of application: **28.05.2025**
(21) Application number: 23843261.1
(22) Date of filing: 12.07.2023
(51) Int. Cl.: B64C 39/02, G05D 1/20, B64U 101/30

(54) **ELECTRONIC DEVICE OPERATING METHOD FOR OBTAINING IMAGE INFORMATION, AND ELECTRONIC DEVICE FOR SUPPORTING SAME**

(30) Priority: 21.07.2022 KR 20220090419
(71) Applicant: Agency For Defense Development, Daejeon 34060 (KR)
(72) Inventor: CHO, Jung Hee, Daejeon 34060 (KR); CHOI, Yun Jeong, Daejeon 34060 (KR); LEE, Hay Rim, Daejeon 34060 (KR)
(74) Representative: Murgitroyd & Company
(86) International application number: PCT/KR2023/009950
(87) International publication number: WO 2024/019411

(57) **Abstract**

Provided is a method for an electronic device for obtaining image information about a target may include identifying, based on information about a mission plan set for the electronic device to photographing a target, a flight time for the electronic device to fly, a first flight path for the electronic device to fly, and first photographing mission information for the electronic device to photograph a first target on the first flight path, obtaining first wind information identified in response to the flight time and the first flight path, calculating, based on a first flight speed at which the electronic device flies on the first flight path and the first wind information, a first corrected shooting path section for correcting a first default shooting path section set on the first flight path for photographing the first target, and obtaining first image information of photographing the first target in the first corrected shooting path section.

## Description

### Technical Field

This disclosure relates to a method and a device for obtaining image information, and one particular implementation relates to a method and electronic device for obtaining image information of photographing a target included in a mission plan of an unmanned aerial vehicle taking into account a windy operating environment.

### Background Art

Unmanned aerial electronic devices, represented by unmanned aerial vehicles (UAVs) or unmanned air vehicles, are aircrafts that fly by remote control or autonomously along a designated route without a person on board. They have been used primarily for military purposes, but recently, UAVs are being used in various fields such as transportation and security, and may also be used for personal purposes. As UAVs become more common, there is a need to manage the use, operation, and network for remote control of UAVs.

Since the environment in which UAVs are operated is affected by the weather, such as wind and rainfall, it has been recently considered to reflect information related to the weather when UAVs are operated so that UAVs can be operated stably.

In this regard, reference can be made to prior art such as KR1020140123835A1.

### Disclosure of Invention

### Technical Goals

An aspect provides an electronic device capable of obtaining image information of a target included in a mission plan taking into account a windy operating environment.

The technical aspects of the present disclosure are not limited to those mentioned above, and other aspects that are not mentioned will be clearly understood by those skilled in the art to which the present disclosure pertains from the following description.

### Technical solutions

According to an aspect, there is provided an electronic device operating method for obtaining image information and an electronic device for supporting the same.

According to an aspect, there is provided a method for an electronic device for obtaining image information about a target including identifying, based on information about a mission plan set for the electronic device to photograph a target, a flight time for the electronic device to fly, a first flight path for the electronic device to fly, and first photographing mission information for the electronic device to photograph a first target on the first flight path, obtaining first wind information identified in response to the flight time and the first flight path, calculating, based on a first flight speed at which the electronic device flies on the first flight path and the first wind information, a first corrected shooting path section for correcting a first default shooting path section set on the first flight path for photographing the first target, and obtaining first image information of photographing the first target in the first corrected shooting path section.

In an example embodiment, the information about the mission plan may include information on the flight time, information on a plurality of flight paths over which the electronic device flies to carry out the mission plan, information on one or more targets to be photographed from each flight path included in the plurality of flight paths, and information on each photographing mission for photographing each target included in the one or more targets.

In an example embodiment, the method for obtaining image information may further include obtaining image information of photographing the each target on the each flight path, determining that photographing corresponding to the each flight path is complete if image information is obtained for all of the one or more targets corresponding to the each flight path, and determining that the mission plan is complete if photographing has been completed for all of the plurality of flight paths.

In an example embodiment, obtaining the first wind information may include obtaining comprehensive wind information comprising wind direction information and wind speed information corresponding to a time, a region, and an altitude, and obtaining, from the comprehensive wind information, the first wind information identified based on the flight time, a region and an altitude encompassing the first flight path.

In an example embodiment, the method for obtaining image information may further include identifying a photographing area range of the electronic device. The first default shooting path section may be a path section that is calculated such that the first target is included in the photographing area range for the electronic device flying along the first flight path in windless conditions.

In an example embodiment, calculating the first corrected shooting path section may include obtaining, based on first wind speed information and first wind direction information included in the first wind information, a first crab angle corresponding to an angle at which an orientation of a heading part of the electronic device flying at the first flight speed is changed, and calculating, based on the first default shooting path section and the first crab angle, a first corrected shooting path section such that the first target is included in the photographing area range reoriented according to the first crab angle.

In an example embodiment, the method for obtaining image information may further include setting a threshold angle for determining to calculate the first corrected shooting path section, and determining to calculate the first corrected shooting path section if the first crab angle is greater than or equal to the threshold angle.

In an example embodiment, the method for obtaining image information may further include setting flag information for determining to calculate the first corrected shooting path section, and determining, based on an input corresponding to the flag information, to calculate the first corrected shooting path section.

According to another aspect, there is also provided a non-transitory computer-readable storage medium having a program for executing an image information acquisition method on a computer, the method including identifying, based on information about a mission plan set for photographing a target, a flight time, a first flight path, and first photographing mission information for photographing a first target on the first flight path, obtaining first wind information identified in response to the flight time and the first flight path, calculating, based on a first flight speed flying on the first flight path and the first wind information, a first corrected shooting path section for correcting a first default shooting path section set on the first flight path for photographing the first target, and obtaining first image information of photographing the first target in the first corrected shooting path section.

According to yet another aspect, there is provided an electronic device for obtaining image information about a target including a processor, and one or more memories storing one or more instructions, in which the one or more instructions, when executed, control the processor to perform identifying, based on information about a mission plan set for the electronic device to photograph a target, a flight time for the electronic device to fly, a first flight path for the electronic device to fly, and first photographing mission information for the electronic device to photograph a first target on the first flight path, obtaining first wind information identified in response to the flight time and the first flight path, calculating, based on a first flight speed at which the electronic device flies on the first flight path and the first wind information, a first corrected shooting path section for correcting a first default shooting path section set on the first flight path for photographing the first target, and obtaining first image information of photographing the first target in the first corrected shooting path section.

The various example embodiments of the present disclosure described above are only some of the example embodiments of the present disclosure, and various other example embodiments reflecting the technical features of the various example embodiments of the present disclosure can be derived and understood by those skilled in the art based on the detailed description set forth below.

### Effects

According to example embodiments, it is possible to obtain image information by photographing a target included in a mission plan with an electronic device in consideration of a windy operating environment, and it has technical effect in terms of being able to photograph the target smoothly and obtain appropriate image information even if the heading orientation of the electronic device changes under the influence of wind.

The effects of the present disclosure are not limited to the effects mentioned above, and other effects not mentioned will be clearly understood by those skilled in the art from the following description.

### Brief Description of Drawings

FIG. 1 is a diagram illustrating an image information acquisition system in which an operating method for an electronic device for obtaining image information may be implemented, according to various example embodiments.
FIG. 2 is a diagram illustrating a configuration of a node according to various example embodiments.
FIG. 3 is a structural diagram illustrating an electronic device performing an image information acquisition method proposed by the present disclosure.
FIG. 4 is a diagram illustrating an operating method of an electronic device for obtaining image information according to various example embodiments.
FIG. 5 is a diagram illustrating an electronic device operating to process a mission plan for photographing a target.
FIG. 6 is a diagram illustrating an operational process of an electronic device processing a mission plan for photographing a target.
FIG. 7 is a diagram illustrating an electronic device photographing a target in a default shooting path section when a crab angle is occurred.
FIG. 8 is a diagram illustrating an electronic device photographing a target in a corrected shooting path section when a crab angle is occurred.
FIG. 9 is a diagram illustrating an electronic device obtaining a crab angle.
FIG. 10 is a diagram illustrating an operation of an electronic device calculating a corrected shooting path section.

### Best Mode for Carrying Out the Invention

The following example embodiments are combinations of components and features of various example embodiments in predetermined forms. Each component or feature may be considered as optional unless explicitly stated otherwise. Each component or feature may be implemented in a form that is not combined with other components or features. In addition, various example embodiments may be configured by combining some components and features. The order of operations described in various example embodiments may be changed. Some configurations or features of one example embodiment may be included in other example embodiments, or may be replaced with corresponding configurations or features of other example embodiments.

In describing the drawings, descriptions of procedures or operations that may obscure the gist of various example embodiments are not described, and procedures or operations that are understandable at the level of those skilled in the art are not described either.

Throughout the specification, when it is stated that a part "comprises" or "includes" a certain component, it means that other components may further be included, and it does not preclude other components, unless otherwise stated. In addition, terms such as "...part", "..unit", "..module", and the like described in the specification mean a unit for performing at least one function or operation, which may be implemented as hardware or software, or as a combination of hardware and software. In addition, "a", "an", "one", "the" and similar related terms are used herein in a sense encompassing both the singular and the plural in the context of describing various example embodiments (especially in the context of the following claims) unless otherwise indicated or clearly contradicted by context.

Hereinafter, preferred implementations according to various example embodiments will be described in detail with reference to the accompanying drawings. The detailed description to be disclosed below with the accompanying drawings is intended to describe exemplary implementations of various example embodiments, and is not intended to represent the only implementation.

In addition, specific terms used in various example embodiments are provided to aid understanding of various example embodiments, and the use of these specific terms may be changed in other forms without departing from the technical spirit of the various example embodiments.

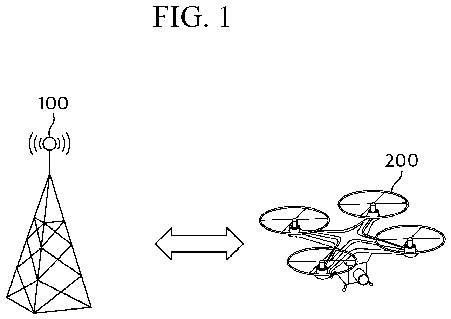

FIG. 1 is a diagram illustrating an image information acquisition system in which an operating method for an electronic device for obtaining image information may be implemented, according to various example embodiments.

Referring to FIG. 1, the image information acquisition system according to various example embodiments may be implemented in various types of electronic devices. For example, the image information acquisition system may be implemented by an electronic device corresponding to a device node represented by a control station 100 or an unmanned aerial vehicle (UAV) 200. Each node represented by the control station 100 or the UAV 200 may be one or some of any type of nodes that are capable of communicating to transmit or receive information, such as user equipment, drones, satellites, unmanned aerial vehicles (UAVs), base stations, transmission and reception points (TRPs), or network nodes. In other words, the image information acquisition system of FIG. 1 may be implemented by electronic devices corresponding to various nodes, and the node described hereinafter as the subject of the image information acquisition system may be a concept including any type of electronic device capable of communicating to transmit and receive information.

Referring to FIG. 1, the image information acquisition system of the present disclosure may be implemented between electronic devices corresponding to a node represented by the control station 100 and a device node represented by the UAV 200. In other words, the electronic device corresponding to the node represented by the control station 100 or the UAV 200 may perform operations according to various example embodiments of the present disclosure based on the image information acquisition system implemented in the respective devices. The image information acquisition system according to various example embodiments may be implemented on a variety of other electronic devices and servers, but not limited to those shown in FIG. 1 above.

The node represented by the control station 100, according to various example embodiments, may be a device that performs wireless and wired communications with the device nodes represented by a plurality of UAVs 200 and includes storage with a large storage capacity. In addition, other electronic devices performing similar functions may be utilized as the node represented by the control station 100.

The device node represented by the UAV 200, according to various example embodiments, may be a device that performs wireless and wired communication with the control station 100 and includes storage with a certain storage capacity. The device node represented by the UAV 200 may also be an air vehicle including a device that may be utilized by an individual user, such as a desktop device, a tablet device, a mobile device, or the like. In addition, other electronic devices performing similar functions may be utilized as the device node represented by the UAV 200.

The image information acquisition system according to various example embodiments may include various modules for its operation. The modules included in the image information acquisition system may be one or more instructions or computer code implemented to enable a physical device (e.g., a node including the control station 100 or the UAV 200) on which the image information acquisition system is implemented (or included in the physical device) to perform a specified action. In other words, a physical device on which the image information acquisition system is implemented may store a plurality of modules in memory in the form of computer code, and when the plurality of modules stored in memory are executed, the plurality of modules may cause the physical device to perform specified actions corresponding to the plurality of modules.

Alternatively, the image information acquisition system according to various example embodiments may include a non-transitory computer-readable storage medium (or non-transitory recording medium) for its operation. The non-transitory computer-readable storage medium included in the image information acquisition system may include a medium configured to store computer-readable instructions on which the image information acquisition system is implemented (or included in a physical device). In other words, computer-readable instructions in which the image information acquisition system is implemented are stored on the medium, and when the computer-readable instructions stored on the medium are executed, the computer-readable instructions can control the medium to perform specified actions.

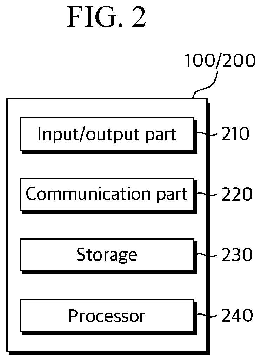

FIG. 2 is a diagram illustrating a configuration of a node according to various example embodiments.

Referring to FIG. 2, a node represented by the control station 100 or the UAV 200 may include an input/output part 210, a communication part 220, a storage 230, and a processor 240.

The input/output part 210 may be various interfaces or connection ports that receive a user input or output information to a user. The input/output part 210 may include an input module and an output module, and the input module receives the user input from the user. The user input may be made in various forms, including a key input, touch input, and voice input. Examples of the input module that can receive such user inputs include a traditional keypad, a keyboard, and a mouse, as well as a touch sensor that detects a user's touch, a microphone that receives a voice signal, a camera that recognizes gestures through image recognition, proximity sensors including at least one of an illuminance sensor or an infrared sensor that detects a user approach, a motion sensor that recognizes a user motion through an acceleration sensor or a gyro sensor, and other input means of various types that detect or receive a user input of various other types, and the input module according to the example embodiment of the present disclosure may include at least one of the devices listed above. Here, the touch sensor may be implemented as a piezoelectric or capacitive touch sensor that senses a touch through a touch panel or a touch film attached to a display panel, an optical touch sensor that senses a touch by an optical method, or the like. In addition, the input module may be implemented in the form of an input interface (USB port, PS/2 port, etc.) that connects an external input device that receives a user input instead of a device that detects a user input by itself. Also, the output module can output various types of information. The output module may include at least one of a display that outputs an image, a speaker that outputs sound, a haptic device that generates vibration, and other various types of output means. In addition, the output module may be implemented in the form of a port-type output interface for connecting the individual output means described above.

As an example, the output module in the form of a display may display text, still images, and moving pictures. The display may include at least one of a liquid crystal display (LCD), a light emitting diode (LED) display, an organic light emitting diode (OLED) display, a flat panel display (FPD), a transparent display, a curved display, a flexible display, a 3D display, a holographic display, a projector, and other various types of devices that can perform image output functions. Such a display may be in the form of a touch display integrated with the touch sensor of the input module.

The communication part 220 may communicate with other devices. Accordingly, each node 100 or 200 may transmit and receive information to and from other devices through the communication part. For example, each node 100 or 200 may communicate with each other using the communication part or may communicate with other devices.

Here, communication, that is, data transmission/reception may be performed by wire or wirelessly. To this end, the communication part may be configured with a wired communication module, a mobile communication module that connects to a mobile communication network through a mobile communication base station to transmit and receive data, a short-range communication module that uses a wireless local area network (WLAN) communication method such as Wi-Fi or a wireless personal area network (WPAN) communication method such as Bluetooth and Zigbee, a satellite communication module using Global Navigation Satellite System (GNSS) such as Global Positioning System (GPS), or a combination thereof.

The storage 230 may store various types of information. The storage can store data temporarily or semi-permanently. For example, in the storage of each node 100 or 200, an operating system (OS) for driving each node 100 or 200, data for hosting a website, a program for generating braille, data about the application (for example, web application), and so on may be stored. In addition, the storage may store modules in the form of computer codes as described above.

Examples of the storage 230 include a hard disk drive (HDD), a solid state drive (SSD), a flash memory, a read-only memory (ROM), a random access memory (RAM), and so on. Such a storage may be provided as a built-in type or a detachable type.

The processor 240 controls the overall operation of each node 100 or 200. To this end, the processor 240 may perform calculations and processing of various types of information and control operations of components of each node 100 or 200. For example, the processor 240 may execute a program or an application for obtaining image information. The processor 240 may be implemented as a computer or a similar device according to hardware, software, or a combination thereof. In hardware, the processor 240 may be implemented in the form of an electronic circuit that performs a control function by processing an electrical signal, and in software, it may be implemented in the form of a program that drives the hardware processor 240. On the other hand, in the following description, if there is no special mention, the operation of each node 100 or 200 may be interpreted as being performed under the control of the processor 240. That is, when the modules implemented in the above-described image information acquisition system are executed, the modules may be interpreted as controlling the processor 240 to cause each node 100 or 200 to perform the following operations.

In summary, various example embodiments can be implemented through various means. For example, various example embodiments may be implemented by hardware, firmware, software, or a combination thereof.

In the case of hardware implementation, methods according to various example embodiments can be implemented by one or more of application specific integrated circuits (ASICs), digital signal processors (DSPs), digital signal processing devices (DSPDs), programmable logic devices (PLDs), and field programmable gate arrays (FPGAs), processors, controllers, microcontrollers, microprocessors, and the like.

In the case of implementation by firmware or software, the method according to various example embodiments may be implemented in the form of a module, a procedure, or a function that performs features or operations described below. For example, the software code may be stored in a memory and driven by the processor. The memory may be located inside or outside the processor, and may exchange data with the processor through various known means.

Hereinafter, various example embodiments will be described in more detail based on the above technical idea. For various example embodiments described below, the above-described contents may be applied. For example, operations, functions, terms, or the like that are not defined in various example embodiments described below may be performed and described based on the above-described contents.

A surveillance and reconnaissance unmanned aerial system refers to an integrated system in which a UAV obtains distant image information of a target and transmits the obtained image information in real time to the control station 100 or the like in order to perform the mission of surveillance and reconnaissance of the target.

In particular, since the surveillance and reconnaissance unmanned aerial system enables a surveillance and reconnaissance mission to be performed by a UAV without direct human input in the defense field, specific and sophisticated instructions may be required to assign a surveillance and reconnaissance mission to the UAV, and it may be necessary to manage the UAV to respond to changes in the operational environment in which it is operated to perform the surveillance and reconnaissance mission in various ways. In the case of an operational environment in which the UAV operates, the user or administrator operating the UAV may configure the UAV to transmit and receive information related to the operational environment to and from the UAV, thereby enabling the UAV to be adaptively managed to operational environments changing moment to moment depending on flight path due to various conditions such as time, region, and/or altitude. In particular, various pieces of information related to the operational environment in which the UAV is operated can be easily collected and managed in the field of defense. Accordingly, if the various pieces of information that can be easily collected and managed in the field of defense are provided to the UAV as part of the information for planning the mission of the UAV or in conjunction with the information for planning the mission of the UAV, the operational efficiency of the UAV can be maximized.

Depending on its mission objectives, a UAV may require periodic and extended reconnaissance missions. Therefore, it may be essential to preset a mission plan, such as a flight path plan and/or an image acquisition plan, in order to operate the UAV for surveillance and reconnaissance missions.

Among the mission plans set in advance for the UAV, the plan for image acquisition should be able to reflect the physical characteristics of the UAV and/or the image sensor on board the UAV and the conditions under which the UAV's image sensor is able to photograph so that the UAV can photograph a target and obtain image information. The conditions under which the physical characteristics of the UAV and/or its image sensor allow the UAV to obtain images may include, for example, the maximum or minimum operating altitude at which the UAV can be operated, the imaging distance of the image sensor, the azimuthal or elevation drive range for operating the image sensor, and/or the imaging mode of the image sensor.

On the other hand, the atmospheric environment in which the UAV is operated may be affected by different winds depending on the altitude or region, and these winds may also affect imaging of the image sensor on the UAV. Therefore, when setting a mission plan for the UAV in advance, the image acquisition plan for the UAV should take into account the external wind environment as well as the imaging conditions based on the physical characteristics of the UAV, such as the image sensor on board the UAV. If the effect of wind is not taken into account when setting a plan for image acquisition, the crab angle, which is the angle at which the heading of the aircraft changes compared to the flight path originally intended to be flown due to the wind, may occur when the UAV is actually performing the mission, and the range of the imaging area that the image sensor on the UAV is aimed at to photograph the target may also deviate compared to the windless condition without the effect of wind, so that the UAV cannot obtain the image information of the target that it originally intended to obtain.

The influence of wind, including the wind direction, wind speed, etc., in the atmospheric environment in which the UAV is operated varies depending on the time, region, and altitude. Accordingly, the influence of wind must be reflected differently for each flight path (LEG) along which the UAV is operated in response to the plan for image acquisition. In this case, the image acquisition plan included in the mission plan that is preset for the UAV may be written so that the UAV can be operated along various flight paths to photograph multiple targets or subjects, so an efficient image acquisition plan processing method may be required so that the image acquisition plan of the UAV can be created or corrected in bulk for the entire flight paths, rather than being created or corrected for each individual flight path.

In the present disclosure below, a method is proposed to obtain appropriate image information about a target by setting a mission plan that is able to correct the deviation of the photographing area range for the target aimed at by a UAV through an image sensor by reflecting wind information, so that the target can be photographed while minimizing the influence of wind. The present disclosure also proposes a method for obtaining and managing wind information so that a UAV, in performing actions that reflect wind information, can reflect appropriate wind information corresponding to the flight time and the mission area in which the UAV is operated to perform the mission plan, and a method for efficiently correcting settings related to photographing plans for a plurality of targets on various flight paths included in a single mission plan.

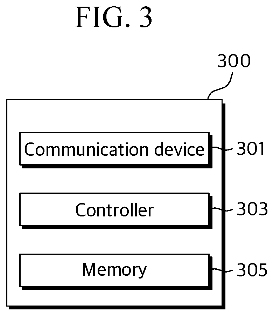

FIG. 3 is a structural diagram illustrating an electronic device performing an image information acquisition method proposed by the present disclosure.

In FIG. 3, the electronic device 300 performing the image information acquisition method may include a communication device 301, a controller 303, and a memory 305. Each of the components included in the electronic device 300 according to FIG. 3 may correspond to a configuration of the device node according to FIG. 2, or the electronic device 300 according to FIG. 3 may include a configuration of the device node according to FIG. 2. For example, the electronic device 300 of FIG. 3 may correspond to a UAV, and the communication device 301 included in the electronic device 300 may correspond to the communication part 220 of FIG. 2 to transmit and receive signals to and from an external device.

The electronic device 300 according to FIG. 3 may be connected to the control center 100 or other device node 200 via the communication device 301, and may transmit and receive signals to and from the control center 100 or other device node 200 based on this.

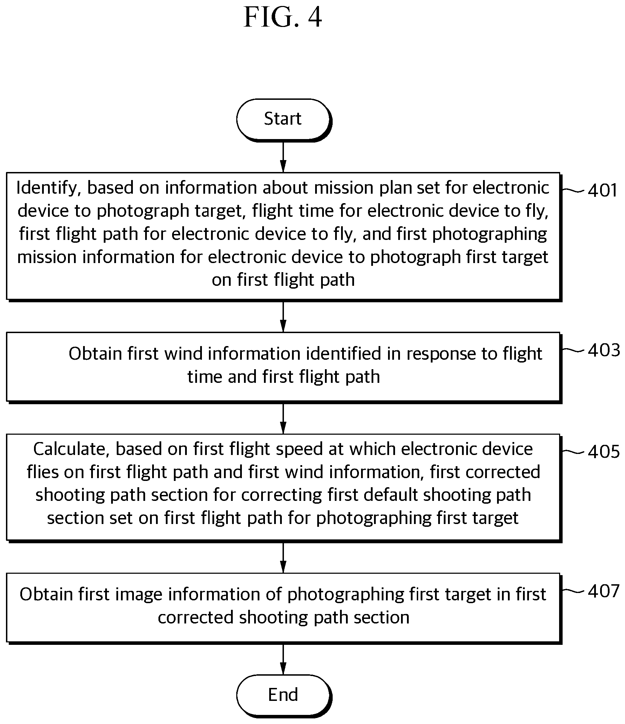

The controller 303 may control the electronic device 300 to perform the image information acquisition method including various example embodiments according to FIGS. 4 through 10, which will be described later. In one example, the controller 303 may control the electronic device 300 to perform each of operations 401 to 407 of FIG. 4, which will be described later, and may control the electronic device 300 to store, send, and receive various pieces of information necessary to perform operations 401 to 407 of FIG. 4.

The memory 305 may be a volatile memory or a non-volatile memory, and the code of a program required for the controller 303 to execute the program for performing the image information acquisition method may be stored in the memory 305.

The electronic device 300 performing the image information acquisition method in the present disclosure is not limited to the configuration of FIG. 3, and other general purpose components may be included in the electronic device 300 of the present disclosure in addition to the various components shown in FIG. 3.

FIG. 4 is a diagram illustrating an operating method of an electronic device for obtaining image information according to various example embodiments.

In FIG. 4, an electronic device corresponding to a UAV or unmanned air vehicle may identify, based on information about a mission plan set for the electronic device to photograph a target, a flight time for the electronic device to fly, a first flight path for the electronic device to fly, and first photographing mission information for the electronic device to photograph the first target on the first flight path (401). The electronic device may then obtain first wind information identified in response to the flight time and the first flight path (403) and calculate a first corrected shooting path section for correcting the first default shooting path section set on the first flight path for photographing the first target based on a first flight speed at which the electronic device flies on the first flight path and the first wind information (405). After calculating the first corrected shooting path section, the electronic device may obtain first image information of photographing the first target in the first corrected shooting path section (407). The operation of the electronic device according to FIG. 4 may include, or be based on, the various example embodiments below.

According to various example embodiments, in operation 401, the electronic device may identify, based on the information on a mission plan set for the electronic device to photograph a target, the flight time for the electronic device to fly, the first flight path for the electronic device to fly, and first photographing mission information for the electronic device to photograph the first target on the first flight path.

For example, information about a mission plan set for the electronic device to photograph a target may be information corresponding to a single mission plan. In this case, the single mission plan may include a plurality of flight paths (LEGs) over which the electronic device is to be operated, and in correspondence with the one flight path, a plan of individual image acquisition for each of the one or more targets to be photographed over the one flight path, i.e., individual photographing mission information for photographing each target on the one flight path may be assigned. Thus, the operation of the electronic device obtaining wind information in accordance with FIG. 4, or the operation of the electronic device flying at a constant flight speed calculating a crab angle corresponding to the angle at which the heading part of the electronic device has changed its orientation due to wind, in accordance with example embodiments to be described later, may be operations performed sequentially for each of the multiple flight paths included in the one mission plan. Similarly, the operation of the electronic device according to example embodiments to be described later to correct a shooting path section of a target included in the initial image acquisition plan, i.e., the default shooting path section of a target included in the initial photographing mission information, based on the crab angle may be performed in response to individual photographing mission information for photographing each target.

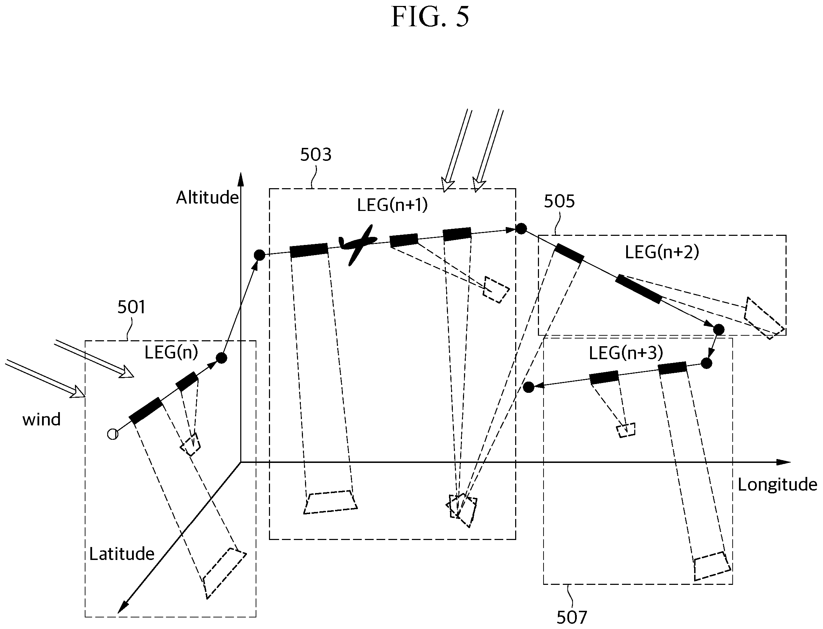

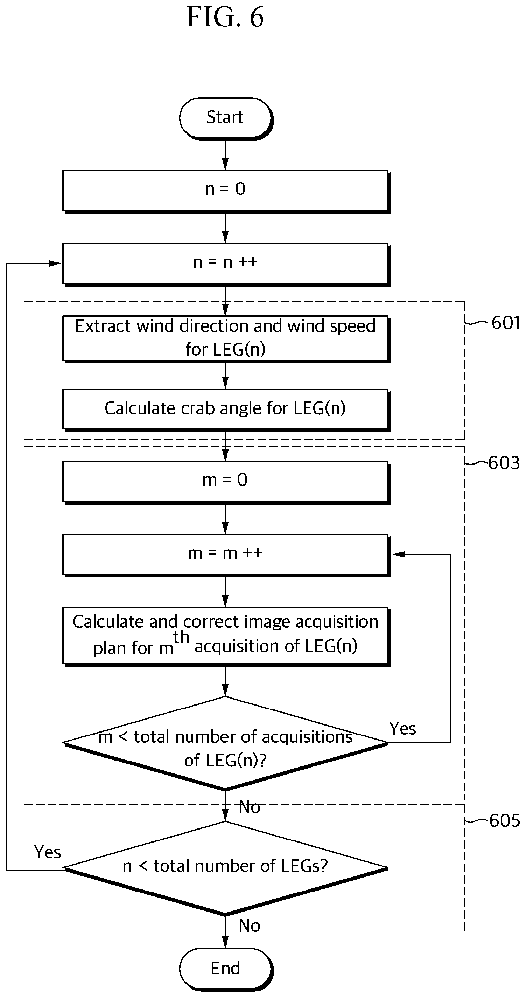

As described above, a mission plan for the electronic device to photograph a target may be configured to take into account the effects of wind for each flight path included in the mission plan set in the electronic device and/or for each target to be targeted in each flight path, thereby enabling the electronic device to batch and efficiently process operations such as obtaining image information or correcting shooting path sections corresponding to multiple targets assigned to flight paths distributed in different regions and/or at different altitudes. A specific view or operational process of the electronic device processing one mission plan may be as shown in FIGS. 5 and 6.

FIG. 5 is a diagram illustrating an electronic device operating to process a mission plan for photographing a target.

In FIG. 5, a mission plan set for the electronic device may include a plan to obtain image information for each target on flight paths LEG(n), LEG(n+1), LEG(n+2), and LEG(n+3). Specifically, the electronic device assigned the mission plan may 1) fly along the flight path LEG(n) at 501 to obtain image information for one or more targets, in which example embodiments of the present disclosure may be applied including obtaining image information for each target in accordance with the respective photographing mission information set for each target, or photographing each target in a corrected shooting path section that is corrected using a crab angle from the default shooting path section originally set to photograph each target.

Similarly, the electronic device may fly 2) along the flight path LEG(n+1) at 503, 3) along the flight path LEG(n+2) at 505, and 4) along the flight path LEG(n+3) at 507 to obtain image information for one or more targets along each flight path.

In this case, each of the flight paths LEG(n), LEG(n+1), LEG(n+2), and LEG(n+3) included in the mission plan set for the electronic device may be affected by winds having different wind speeds and wind directions, as shown in FIG. 5 with different arrows indicating the wind for each of the flight paths LEG(n), LEG(n+1), etc., and the electronic device may identify the respective wind information for each flight path and calculate a crab angle that may reflect the respective wind information to obtain a corrected shooting path section on each flight path. Additionally, this operation of the electronic device may be performed in batch for the flight paths included in the mission plan.

FIG. 6 is a diagram illustrating an operational process of an electronic device processing a mission plan for photographing a target.

In FIG. 6, the electronic device may obtain wind information corresponding to the flight path of LEG(n) included in the mission plan to extract wind direction information and wind speed information, and may calculate a crab angle in the flight path of LEG(n) based on the wind direction and speed information and the flight speed at which the electronic device is flying in the flight path of LEG(n) (601).

Having calculated the crab angle in the flight path of LEG(n), the electronic device may then calculate a respective corrected shooting path section for photographing each target in the flight path of LEG(n), and may photograph each target in the flight path of LEG(n) based on the calculation. The calculation of the corrected shooting path section and the operation of photographing the targets may be repeated until the image information for the number of targets to be photographed through the flight path of LEG(n) has been obtained (603).

Having obtained the image information for the number of targets to be photographed along the flight path of LEG(n), the electronic device may fly along the next flight path of LEG(n+1) and repeat operations of 601 to 603, and the iterative operation of the electronic device may be completed when operations of 601 to 603 are performed for all flight paths included in the mission plan (605).

For example, the information about the mission plan set for the electronic device may include information on a plurality of targets that the electronic device is to photograph through the mission plan. That is, the electronic device may identify information about what the plurality of targets corresponding to the targets in the mission plan are, where the locations of the plurality of targets are, and the like from the information about the mission plan

For example, the information about the mission plan set for the electronic device may include information on a flight time that the electronic device will fly to fulfill the mission plan, or information on an expected mission date.

For example, the information about the mission plan set for the electronic device may include information on a plurality of flight paths that the electronic device will fly to carry out the mission plan. That is, the information on a plurality of flight paths for photographing a plurality of targets may be included in the information about the mission plan.

For example, the information about the mission plan set for the electronic device may include information on one or more targets to be photographed from each flight path included in the plurality of flight paths that the electronic device flies to fulfill the mission plan. Since the plurality of targets corresponding to the targets in the mission plan may be photographed over different flight paths, the electronic device may identify one or more targets to be photographed over each flight path.

For example, the information about the mission plan set for the electronic device may include information on each photographing mission for the electronic device to photograph each target included in the one or more targets to be photographed over each flight path. That is, the information about the mission plan may include information related to a plan for obtaining images of respective targets.

For example, processing of the mission plan by the electronic device may be completed by determining whether image information for one or more targets to be photographed in each flight path is obtained to complete photographing corresponding to each flight path and whether photographing is completed for all flight paths. That is, if the electronic device is required to photograph one or more targets in each flight path included in the plurality of flight paths based on a mission plan, the electronic device may obtain image information of each target included in the one or more targets in each flight path. When image information of all of the one or more targets corresponding to each flight path is obtained, the electronic device may determine that the photographing corresponding to each flight path is complete. Further, when photographing corresponding to all of the plurality of flight paths is complete, the electronic device may determine that the mission plan is complete.

For example, the photographing mission information for photographing a particular target corresponding to a particular flight path included in the information about the mission plan set for the electronic device may include information about a default shooting path section that is calculated, based on the range of the photographing area of the electronic device, such that flying along the flight path in windless conditions would result in the inclusion of the particular target in the range of the photographing area of the electronic device.

According to various example embodiments, in operation 403, the electronic device may obtain first wind information that is identified corresponding to the flight time and the first flight path.

For example, the first wind information obtained by the electronic device in accordance with operation 403 may be information obtained based on comprehensive wind information that includes wind direction information and/or wind speed information identified corresponding to time, region, and/or altitude. In other words, the electronic device may obtain the comprehensive wind information including wind direction information and/or wind speed information identified corresponding to time, region, and/or altitude from the control center 100 or from another management center associated with the control center 100 for receiving information related to weather. From the comprehensive wind information obtained, the electronic device may identify and obtain the first wind information corresponding to the time, region, and altitude in which the electronic device is to fly for a mission plan.

Since the winds in the atmospheric environment in which a UAV or unmanned air vehicle operates vary, for example, depending on the season, time of year, and/or region, it is necessary for the electronic device corresponding to the UAV or unmanned air vehicle to be able to apply accurate wind information that corresponds to the scheduled mission date in which the UAV or unmanned air vehicle is to be flown and the flight path included in the mission plan assigned to the electronic device. To this end, the electronic device may obtain and manage data related to wind information in the form of a table, such as Table 1, which may output average and percentile values of wind direction and wind speed for three-dimensional inputs of time, region, and altitude.

**[Table 1]**

| Time (time axis) | Region (xy plane) | Altitude (z axis) | Wind direction | | | | Wind speed | | | |
|---|---|---|---|---|---|---|---|---|---|---|
| | | | Average | 10% Percenti le | 5% Percenti le | 1% Percent ile | Average | 10% Percent ile | 5% Percent ile | 1% Percent ile |
| January | Region A | 10 km | 270° | 300° | 330° | 355° | 46 m/s | 67 m/s | 74 m/s | 86 m/s |
| | | 11 km | 275° | ... | ... | ... | 55 m/s | ... | ... | ... |
| | | ... | ... | ... | ... | ... | ... | ... | ... | ... |
| | Region A | 10 km | 200° | ... | ... | ... | 43 m/s | ... | ... | ... |
| | | 11 km | 195° | ... | ... | ... | 51 m/s | ... | ... | ... |
| | | ... | | | | | | | | |
| | ... | | | | | | | | | |
| Februar y | Region A | 10 km | 260° | ... | ... | ... | 54 m/s | ... | ... | ... |
| | | 11 km | 265° | ... | ... | ... | 52 m/s | ... | ... | ... |
| | | ... | ... | ... | ... | ... | ... | ... | ... | ... |
| ... | ... | ... | ... | ... | ... | ... | ... | ... | ... | ... |

Based on the wind information in the form of a table, such as Table 1, the electronic device may selectively apply detailed wind direction values and wind speed values for the regions and altitudes covered by the various flight paths within a single mission plan, on a percentile basis. Through this, the similarity between the crab angle occurred by the electronic device in actual flight operations and the crab angle calculated theoretically based on the wind information may increase and the error may be reduced. The wind information obtained by the electronic device according to operation 403 may correspond to some of the information in the form of a table, such as Table 1.

According to various example embodiments, in operation 405, the electronic device may calculate, a first corrected shooting path section for correcting the first default shooting path section set on the first flight path for photographing the first target, based on the first flight speed at which the electronic device flies on the first flight path and the first wind information,

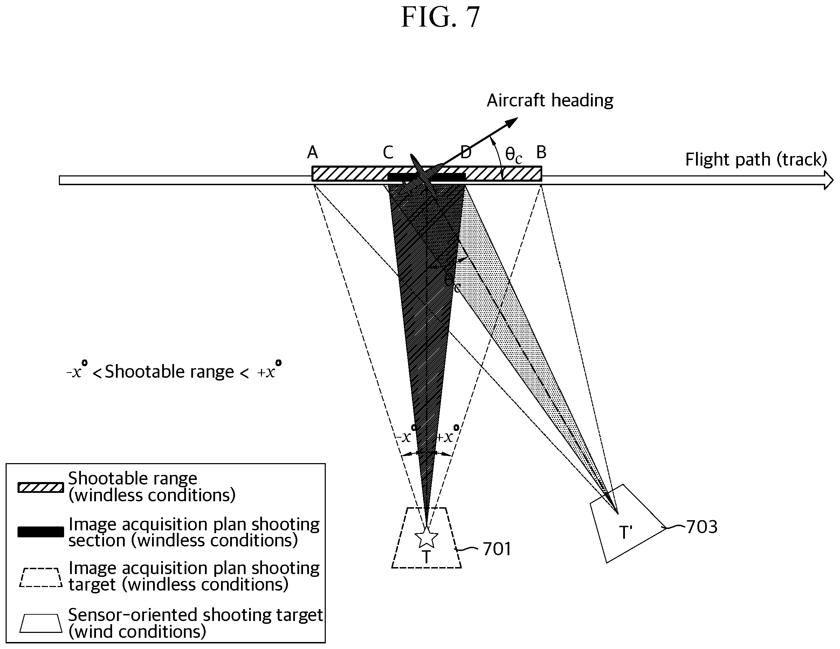

As the electronic device flies to maintain its flight path in the presence of wind, it may experience a crab angle, which is a change in the angle of the orientation of the heading part of the electronic device. When photographing a specific target on a specific flight path, it may be possible to obtain correct image information of the target by photographing the target in the default shooting path section already set in response to the target in windless conditions. However, when a crab angle occurs, the orientation of the heading part of the electronic device changes, and the orientation of the photographing area range of the image sensor mounted on the electronic device also changes, causing the electronic device to photograph different location areas. An electronic device photographing a target along a default shooting path section when a crab angle occurs may be as shown in FIG. 7.

FIG. 7 is a diagram illustrating an electronic device photographing a target in a default shooting path section when a crab angle is occurred.

In FIG. 7, the electronic device flying along the flight path (track) can photograph the target T in the default shooting path section A to B preset for photographing the target T in windless conditions without the influence of wind, and can perform the actual photographing of the target T by setting the actual shooting path section C to D in accordance with the shooting start point and the shooting end point within that section (701). However, if wind blows and the heading of the electronic device is deflected by a crab angle θ_{c} due to the influence of the wind, even if the electronic device photographs images in the section C to D within the default shooting path section A to B, the range of the photographing area of the electronic device will not include the target T, but will include the T' location area. Accordingly, image information of the original target T cannot be obtained (703).

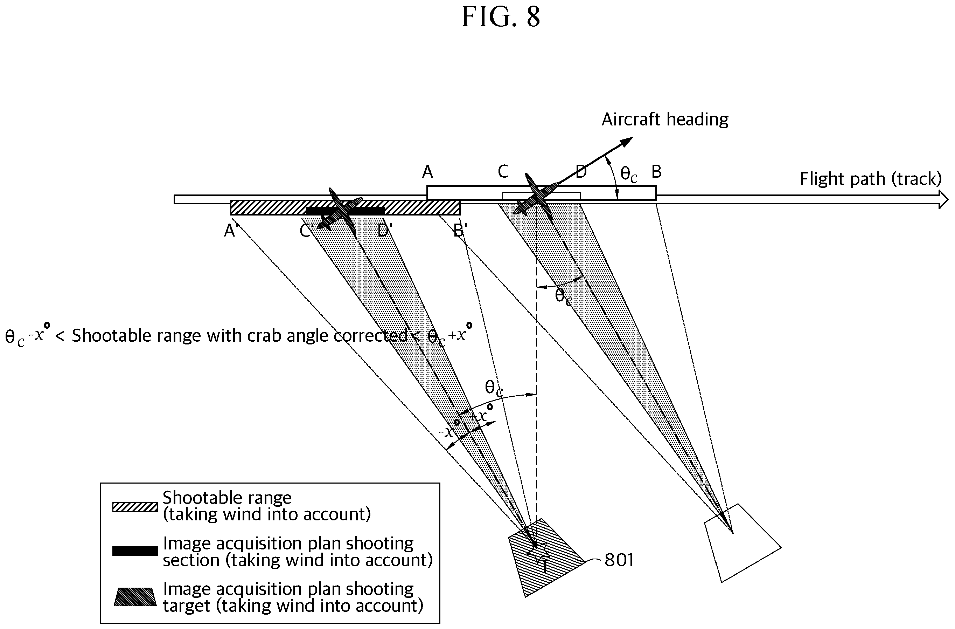

To solve the problem of target orientation due to the influence of wind, as shown in FIG. 7, the electronic device may adjust the default shooting path section A to B, corresponding to the default shooting path section A to B under windless conditions, to corrected shooting path section A' to B' in which the default shooting path section A to B is shifted a certain distance along the flight path to compensate for the deviation due to the occurrence of the crab angle, and the actual shooting section can be adjusted to C' to D' from the shooting start point to the shooting end point within the section accordingly. If the crab angle has a negative (-) value, the corrected shooting path section A' to B' may be advanced in the flight path compared to the default shooting path section A to B in windless conditions, and if the crab angle has a positive (+) value, the corrected shooting path section A' to B' may be retarded in the flight path compared to the default shooting path section A to B in windless conditions. The electronic device photographing the target in the corrected shooting path section when a crab angle is occurred may be as shown in FIG. 8.

FIG. 8 is a diagram illustrating an electronic device photographing a target in a corrected shooting path section when a crab angle is occurred.

In FIG. 8, the electronic device flying along the flight path (track) can photograph the target T in the corrected shooting path section A' to B' in which the default shooting path sections A to B are corrected in response to a crab angle of the heading of the electronic device, and can perform the actual photographing of the target T by setting the corrected shooting section C' to D' in which the actual shooting section C to D are corrected in accordance with the shooting start point and the shooting end point (801). If wind blows and the heading of the electronic device is deflected by a crab angle θ_{c} due to the influence of the wind, the photographing area range of the electronic device is also deflected compared to the case where the crab angle is not occurred. Then, the target T may be included in the photographing area range in the deflected direction when the electronic device performs photographing in the corrected shooting path section A' to B'.

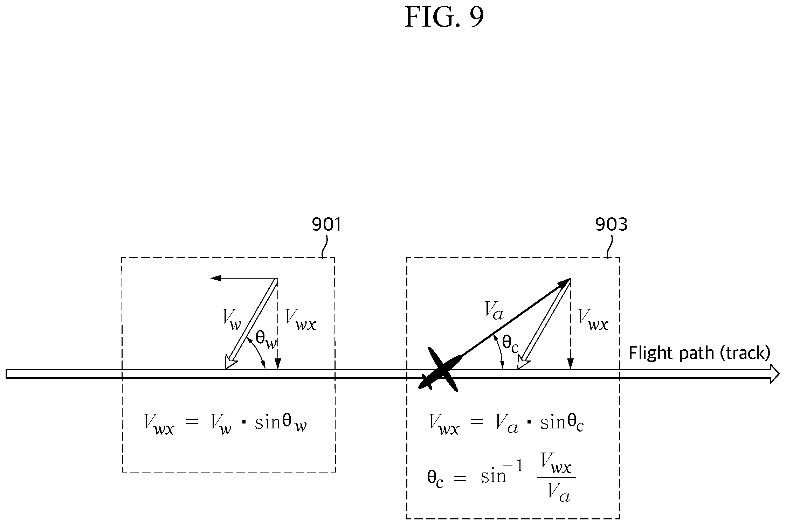

In this case, the specific value of the crab angle for calculating the corrected shooting path section may be obtained in a method as shown in FIG. 9.

FIG. 9 is a diagram illustrating an electronic device obtaining a crab angle.

First, as in 901, the wind vector component V_{wx} perpendicular to the flight path may be calculated via the sine function from the angle θ_{w} between the wind direction and the flight path relative to true north and the wind speed V_{w}. Further, if V_{wx} is calculated as in 901, the crab angle θ_{c} can be calculated via the inverse function of the sine function as in 903 using the flight speed Vₐ of the electronic device.

For example, the first default shooting path section set on the first flight path for photographing the first target may be a path section that is determined to be capable of photographing the first target according to the photographing area range in a windless condition, considering the photographing area range of the electronic device. In other words, the electronic device may identify the photographing area range by the image sensor for obtaining the image information, and calculate the first default shooting path section so that the first target is included in the photographing area range of the electronic device and can be photographed when flying along the first flight path in a windless condition.

The first default shooting path section thus calculated may be managed to be included as part of the photographing mission information for photographing the first target, i.e., as part of a plan for image acquisition corresponding to the first target. Similarly, for the first default shooting path section thus calculated, information about the shooting start point and the shooting end point for directing the first default shooting path section along the first flight path may be managed to be included as part of the photographing mission information for photographing the first target, or as part of the plan for image acquisition corresponding to the first target.

For example, in calculating the first corrected shooting path section according to operation 405, the electronic device may calculate, based on the first wind speed information and the first wind direction information included in the first wind information obtained according to operation 403, a first crab angle corresponding to the angle by which the orientation of the heading part of the electronic device is changed if the electronic device is flying at the first flight speed. Since the orientation of the heading part of the electronic device is changed according to the first crab angle, and the orientation of the shooting area range of the electronic device is also changed, the electronic device may calculate a first corrected shooting path section for correcting the first default shooting path section using the first crab angle so that the first target is included in the reoriented photographing area range and can be photographed.

For example, the electronic device may, when flying along the first flight path, be set to calculate the first corrected shooting path section according to operation 405 only if certain criteria are met and photograph the first target in the calculated first corrected shooting path section, and if the certain criteria are not met, set to photograph the first target in the original first default shooting path section before the correction.

In one example, the electronic device may preset a threshold angle for determining to correct the first default shooting path section to calculate a first corrected shooting path section for photographing a target on the first flight path. When the electronic device is flying at a first flight speed on the first flight path, it may determine to calculate the first corrected shooting path section only if a first crab angle corresponding to an angle at which the orientation of the heading part of the electronic device is changed according to the first wind speed information and the first wind direction information is greater than or equal to the threshold angle. By setting the threshold angle, it is possible to reduce the burden of unnecessarily calculating a corrected shooting path section when the crab angle is very small and the quality is not affected even if the target is photographed in the original default shooting path section.

In another example, the electronic device may preset flag information for determining to correct the first default shooting path section to calculate a first corrected shooting path section for photographing a target on the first flight path, and may determine to calculate the first corrected shooting path section only if an input corresponding to the flag information is verified. That is, the first corrected shooting path section may be calculated only if an input, such as from a user or administrator directing the electronic device to photograph the target on the corrected shooting path section, is verified. Specifically, the flag information may have an input value of ON or OFF, and the user or administrator may provide an input such that each flag information corresponding to each default shooting path section for photographing each target is specified to be ON or OFF, and determine whether the calculation of the first corrected shooting path section corresponding to the first target is also ON or OFF. Depending on the setting of the flag information, management convenience of the user or administrator managing a UAV that photographs targets in response to a crab angle may be facilitated.

For example, the electronic device may determine that it will not be possible to obtain adequate image information of a target if the crab angle becomes larger than a certain angle in a particular flight path, and may set information indicating that the target cannot be photographed in a particular flight path. In other words, if the crab angle obtained in a particular flight path, depending on the influence of wind and the flight speed of the electronic device, is outside a threshold angle for performing a mission, the electronic device may set information indicating that one or more targets that were originally to be photographed in a particular flight path cannot be photographed and transmit the information to the control center 100 or the like.

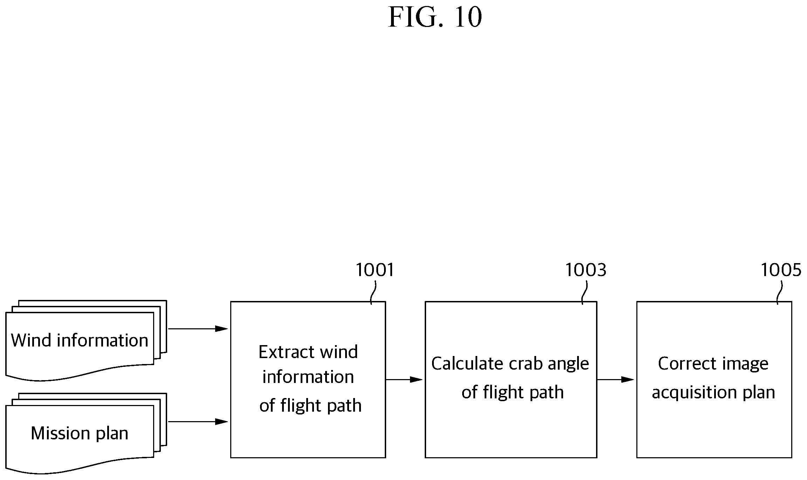

FIG. 10 is a diagram illustrating an operation of an electronic device calculating a corrected shooting path section.

In FIG. 10, the electronic device may extract or obtain wind information for a region that includes the flight path, altitude, and/or time that includes an expected date of flight in response to a flight path included in a mission plan set for the electronic device (1001). The electronic device obtaining the wind information may calculate a crab angle (1003), which is an angle at which the heading part of the electronic device changes its orientation based on information such as wind direction or wind speed included in the wind information and the flight speed of the electronic device to be flown on the corresponding flight path, as in the aforementioned example embodiments, and may calculate a corrected shooting path section by correcting a shooting start point and a shooting end point for setting a shooting path section for photographing a target within the corresponding flight path, taking into account the photographing area range of an imaging sensor mounted on the electronic device and the crab angle (1005).

According to various example embodiments, in operation 407, the electronic device may obtain first image information of photographing a first target in the first corrected shooting path section.

For example, the first image information that the electronic device obtains according to operation 407 may include an image of the first target taken over a period of time.

For example, when the electronic device obtains the first image information obtained in accordance with operation 407, the electronic device may be configured to determine whether the first target is being correctly photographed via the first image information based on information, such as an image previously obtained of the first target.

For example, the first image information that the electronic device obtains according to operation 407 may be configured to be transmitted to the control center 100 in real time when the first image information is obtained, or may be configured to be transmitted to the control center 100 along with other image information about other targets when the mission plan set for the electronic device is completed.

According to a method for obtaining image information according to the present disclosure by an electronic device, that is, an electronic device corresponding to a UAV or unmanned air vehicle according to the present disclosure, in carrying out a predetermined mission plan, the electronic device may correct the image acquisition plan included in the mission plan for the image acquisition conditions of the image sensor as well as the crab angle due to wind influence, so that the desired target image may be obtained in an actual reconnaissance flight mission. In addition, for a large number of target image acquisition plans on different paths for a long reconnaissance mission of a UAV, the image acquisition plan for each target may be corrected in batch while reflecting detailed wind information corresponding to different flight paths, thereby improving the efficiency of mission planning for the UAV.

The example embodiments of the present disclosure disclosed in the specification and the drawings are shown by way of illustration only to facilitate the explanation of the technical content of the present disclosure and to aid in understanding the present disclosure, but are not intended to limit the scope of the present disclosure. It will be apparent to those skilled in the art to which the present disclosure pertains that other modifications based on the technical ideas of the present disclosure may be practiced. Furthermore, each of the above example embodiments may be operated in combination with each other as desired. For example, all of the example embodiments of the present disclosure may be implemented by a system comprising parts in combination with each other.

Furthermore, methods according to systems and the like according to the present disclosure may be implemented in the form of program instructions that may be executed by various computer means and recorded on a computer-readable medium.

As such, various example embodiments of the present disclosure may be implemented, in certain aspects, as computer-readable code on a computer-readable recording medium. A computer-readable recording medium is any data storage device capable of storing data that can be read by a computer system. Examples of computer-readable storage media may include read only memory (ROM), random access memory (RAM), compact disk-read only memory (CD-ROM), magnetic tapes, floppy disks, optical data storage devices, and carrier waves (such as data transmission over the Internet). The computer-readable recording media may also be distributed over networked computer systems, and thus the computer-readable code may be stored and executed in a distributed manner. Further, the functional programs, code, and code segments for accomplishing the various example embodiments of the present disclosure are readily interpretable by programmers skilled in the field to which the present disclosure applies.

It will also be appreciated that the apparatus and method according to various example embodiments of the present disclosure can be realized in the form of hardware, software, or a combination of hardware and software. Such software may be stored, for example, on a volatile or non-volatile storage device, such as a storage device such as a ROM, whether erasable or rewritable, or on a memory, such as, for example, RAM, memory chips, devices, or integrated circuits, or on a storage medium that is both optically or magnetically recordable and machine (e.g., computer) readable, such as, for example, a compact disk (CD), DVD, magnetic disk, or magnetic tape. It will be appreciated that methods according to various example embodiments of the present disclosure may be implemented by a computer including a controller and memory, or a vehicle including such memory or computer, and that such memory is one example of a machine-readable storage medium suitable for storing a program or programs including instructions implementing example embodiments of the present disclosure.

Accordingly, the present disclosure includes a program comprising code for implementing an apparatus or method as claimed herein, and a storage medium readable by a machine (such as a computer) storing such program. Furthermore, such programs may be electronically transmitted via any medium, such as communication signals transmitted via a wired or wireless connection, and the present disclosure includes equivalents thereof as appropriate.

Although the above has been described with reference to example embodiments of the present disclosure, the example embodiments of the present disclosure disclosed in the specification and drawings are only specific examples presented to facilitate the explanation of the technical content of the present disclosure and to aid in understanding the present disclosure, but are not intended to limit the scope of the present disclosure. Furthermore, it will be understood that the example embodiments of the present disclosure described above are merely exemplary, and those skilled in the art will understand that various modifications and equivalent example embodiments are possible therefrom. Accordingly, the true scope of technical protection of the present disclosure should be defined by the following patent claims.

## Claims

1. A method for an electronic device for obtaining image information about a target, the method comprising:
identifying, based on information about a mission plan set for the electronic device to photograph a target, a flight time for the electronic device to fly, a first flight path for the electronic device to fly, and first photographing mission information for the electronic device to photograph a first target on the first flight path;
obtaining first wind information identified in response to the flight time and the first flight path;
calculating, based on a first flight speed at which the electronic device flies on the first flight path and the first wind information, a first corrected shooting path section for correcting a first default shooting path section set on the first flight path for photographing the first target; and
obtaining first image information of photographing the first target in the first corrected shooting path section.

2. The method of claim 1, wherein the information about the mission plan comprises information on the flight time, information on a plurality of flight paths over which the electronic device flies to carry out the mission plan, information on one or more targets to be photographed from each flight path included in the plurality of flight paths, and information on each photographing mission for photographing each target included in the one or more targets.

3. The method of claim 2, further comprising:
obtaining image information of photographing the each target on the each flight path;
determining that photographing corresponding to the each flight path is complete if image information is obtained for all of the one or more targets corresponding to the each flight path; and
determining that the mission plan is complete if photographing has been completed for all of the plurality of flight paths.

4. The method of claim 1, wherein obtaining the first wind information comprises:
obtaining comprehensive wind information comprising wind direction information and wind speed information corresponding to a time, a region, and an altitude; and
obtaining, from the comprehensive wind information, the first wind information identified based on the flight time, a region and an altitude encompassing the first flight path.

5. The method of claim 1, further comprising:
identifying a photographing area range of the electronic device, wherein the first default shooting path section is a path section that is calculated such that the first target is included in the photographing area range for the electronic device flying along the first flight path in windless conditions.

6. The method of claim 5, wherein calculating the first corrected shooting path section comprises:
obtaining, based on first wind speed information and first wind direction information included in the first wind information, a first crab angle corresponding to an angle at which an orientation of a heading part of the electronic device flying at the first flight speed is changed; and
calculating, based on the first default shooting path section and the first crab angle, the first corrected shooting path section such that the first target is included in the photographing area range reoriented according to the first crab angle.

7. The method of claim 6, further comprising:
setting a threshold angle for determining to calculate the first corrected shooting path section; and
determining to calculate the first corrected shooting path section if the first crab angle is greater than or equal to the threshold angle.

8. The method of claim 1, further comprising:
setting flag information for determining to calculate the first corrected shooting path section; and
determining, based on an input corresponding to the flag information, to calculate the first corrected shooting path section.

9. A non-transitory computer-readable storage medium having a program for executing an image information acquisition method on a computer, the method comprising:
identifying, based on information about a mission plan set for photographing a target, a flight time, a first flight path, and first photographing mission information for photographing a first target on the first flight path;
obtaining first wind information identified in response to the flight time and the first flight path;
calculating, based on a first flight speed flying on the first flight path and the first wind information, a first corrected shooting path section for correcting a first default shooting path section set on the first flight path for photographing the first target; and
obtaining first image information of photographing the first target in the first corrected shooting path section.

10. An electronic device for obtaining image information about a target comprising:
a processor; and
one or more memories storing one or more instructions, wherein the one or more instructions, when executed, control the processor to perform:
identifying, based on information about a mission plan set for the electronic device to photograph a target, a flight time for the electronic device to fly, a first flight path for the electronic device to fly, and first photographing mission information for the electronic device to photograph a first target on the first flight path;
obtaining first wind information identified in response to the flight time and the first flight path;
calculating, based on a first flight speed at which the electronic device flies on the first flight path and the first wind information, a first corrected shooting path section for correcting a first default shooting path section set on the first flight path for photographing the first target; and
obtaining first image information of photographing the first target in the first corrected shooting path section.
